# EUROPÄISCHE PATENTSCHRIFT

(11) **EP 1 674 197 B1**
(45) Veröffentlichungstag und Bekanntmachung des Hinweises auf die Patenterteilung: **09.07.2008**
(21) Anmeldenummer: 05022307.2
(22) Anmeldetag: 13.10.2005
(51) Int. Cl.: B23Q 7/04, B25B 1/24, B25B 5/16

(54) **Vorschubvorrichtung für plattenförmige Werkstücke**
Feeding device for plateshaped workpieces
Dispositif d'alimentation des panneaux

(30) Priorität: 23.12.2004 DE 102004062048
(43) Veröffentlichungstag der Anmeldung: 28.06.2006
(73) Patentinhaber: HOLZMA Plattenaufteiltechnik GmbH, 75365 Calw-Holzbronn (DE)
(72) Erfinder: Gröning, Peter, 75392 Deckenpfronn (DE); Hamm, Lothar, 72202 Nagold (DE)
(74) Vertreter: Knapp, Thomas

(56) Entgegenhaltungen:
- DE-U1- 20 103 878
- US-A- 5 876 026
- US-B1- 6 240 815
- PATENT ABSTRACTS OF JAPAN Bd. 004, Nr. 020 (M-092), 19. Februar 1980 (1980-02-19) & JP 54 158774 A (MITSUBISHI ELECTRIC CORP), 14. Dezember 1979 (1979-12-14)

## Beschreibung

Die Erfindung betrifft eine Vorschubvorrichtung für plattenförmige Werkstücke nach dem Oberbegriff des Anspruchs 1, sowie eine Spannzange nach dem Oberbegriff des entsprechenden nebengeordneten Patentanspruchs.

Eine Vorschubvorrichtung der eingangs genannten Art ist aus der DE 201 03 878 U1 bekannt. Sie kommt beispielsweise bei Plattenaufteilanlagen zum Einsatz. Bei diesen liegen großformatige plattenförmige Werkstücke auf einem Auflagetisch und werden mittels der Vorschubvorrichtung zu einer Bearbeitungsvorrichtung, beispielsweise einer Säge, hin bewegt. Die bekannte Vorschubvorrichtung umfasst einen in Vorschubrichtung bewegbaren Balken, an dem mehrere Spannzangen befestigt sind. Jede Spannzange umfasst zwei Klemmbacken, zwischen deren Klemmbereichen ein einzelnes plattenförmiges Werkstück oder auch ein Stapel von plattenförmigen Werkstücken klemmbar ist. Hierzu ist die dem Auflagetisch benachbarte untere Klemmbacke relativ zur Spannzange starr, wohingegen die vom Auflagetisch entfernt angeordnete obere Klemmbacke durch eine pneumatische Stelleinrichtung bewegt werden kann.

Aufgrund der sehr großformatigen Werkstücke haben auch die entsprechenden Auflagetische sehr große Abmessungen. Dabei kann nicht ausgeschlossen werden, dass die Auflagefläche des Auflagetisches leichte Unebenheiten aufweist. Um im Verlaufe der Vorschubbewegung durch solche Unebenheiten verursachte Beschädigungen an dem Werkstück oder ein Abheben des Werkstücks von der Auflagefläche zu verhindern, ist bekannt, die gesamte Spannzange gegenüber dem oben genannten Balken "schwimmend" anzuordnen. Dies bedeutet, dass sich die gesamte Spannzange in einer Richtung senkrecht zum Auflagetisch federnd verschieben kann.

JP 54 158774 A beschreibt eine Klemmvorrichtung für ein rohförmiges Werkstück, bei dem auf die beiden Klemmbereiche jeweils ein Federpuffer aufgesetzt ist.

Aufgabe der vorliegenden Erfindung ist es, eine Vorschubvorrichtung der eingangs genannten Art so weiter zu bilden, dass sie auch bei einer unebenen Anlagefläche eingesetzt werden kann, preiswert baut, und Beschädigungen am Werkstück durch den Klemmvorgang vermieden werden.

Diese Aufgabe wird durch die Merkmale in den beiden nebengeordneten Patentansprüchen gelöst.

Bei der erfindungsgemäßen Vorschubvorrichtung werden Kosten gespart, da nicht mehr die gesamte Spannzange schwimmend gelagert ist, sondern nur noch die üblicherweise an entsprechenden Klemmbacken vorhandenen Klemmbereiche. Dabei sei darauf hingewiesen, dass ein Klemmbacken gegebenenfalls auch mehrere einzelne "Finger" umfassen kann. Die entsprechende schwimmende Lagerung kann daher kleiner, einfacher, und leichter bauen. Außerdem kann die Spannzange bzw. deren Haltekörper einfacher an dem sie tragenden Balken befestigt werden. Darüber hinaus ist die federnd gelagerte Masse geringer, so dass die Spannzange bei ihrer Bewegung in Vorschubrichtung dynamischer auf Unebenheiten der Anlagefläche reagieren kann. Außerdem ist das sich auf dem Werkstück abstützende Gewicht verringert. Beides reduziert die Gefahr von Beschädigungen insbesondere dünner Werkstücke durch die Spannzange.

Vorteilhafte Weiterbildungen der Erfindung sind in Unteransprüchen angegeben.

Besonders vorteilhaft ist es, wenn im Klemmzustand der von der Anlagefläche entfernt angeordnete Klemmbereich eine größere Kraft auf das Werkstück ausübt als der zu der Anlagefläche benachbarte Klemmbereich. Hierdurch wird sichergestellt, dass das Werkstück optimal an der Anlagefläche anliegt.

Eine einfache, kostengünstige, und platzsparende Realisierung der schwimmenden Lagerung des zu der Anlagefläche benachbarten Klemmbereichs besteht darin, diesen an einem Hebel auszubilden, der um eine Achse verschwenkbar ist, die parallel zur Anlagefläche verläuft.

In Weiterbildung hierzu wird vorschlagen, dass der zu der Anlagefläche benachbarte Klemmbereich in der gleichen Ebene wie die Schwenkachse liegt. Hierdurch werden Bewegungen des Klemmbereichs in einer Richtung längs zur Vorschubrichtung bei einer Schwenkbewegung um die Schwenkachse minimiert. Dies erhöht die Präzision bei der Führung des Werkstücks durch die Vorschubvorrichtung.

Alternativ zu einem schwenkbaren Hebel kann der zu der Anlagefläche benachbarte Klemmbereich in einer Richtung linear verschieblich sein, die senkrecht zur Anlagefläche verläuft. Hierdurch werden die oben genannten Sekundärbewegungen längs zur Vorschubrichtung gänzlich vermieden, was zu einer besonders hohen Führungspräzision während der Vorschubbewegung führt.

Vorteilhaft ist es auch, wenn der von der Anlagefläche entfernt angeordnete Klemmbereich mit einer ansteuerbaren pneumatischen Stelleinrichtung verbunden ist. Eine solche kann preiswert realisiert werden, und sie hat gegenüber hydraulischen oder elektrischen Antrieben den Vorteil, dass eine Verschmutzung des Werkstücks durch Betriebs- und/oder Schmierstoffe weitgehend ausgeschlossen ist.

Besonders vorteilhaft ist es auch, wenn auch der zu der Anlagefläche benachbarte Klemmbereich mit einer ansteuerbaren pneumatischen Stelleinrichtung verbunden ist. Somit muss die Klemm- bzw. Öffnungsbewegung nicht nur von dem von der Anlagefläche entfernt angeordneten Klemmbereich bereit gestellt werden, sondern diese wird auch durch den zu der Anlagefläche benachbarten Klemmbereich ermöglicht.

Hierdurch können geringere Hübe realisiert werden, was die konstruktive Auslegung vereinfacht und die Verwendung kleinerer Stelleinrichtungen gestattet.

Dabei ist es besonders vorteilhaft, wenn das Pneumatikvolumen der pneumatischen Stelleinrichtung als Luftfeder wirkt. Dies ist insbesondere bei Pneumatikkolben, aber auch bei Membran- und/oder Balgzylindern der Fall. Die federnde Halterung der Klemmbereiche wird somit automatisch von der pneumatischen Stelleinrichtung übernommen.

In Verbindung mit jener Ausgestaltung der erfindungsgemäßen Vorschubvorrichtung, bei welcher im Klemmzustand der von der Anlagefläche entfernt angeordnete Klemmbereich eine größere Kraft auf das Werkstück ausübt als der zu der Anlagefläche benachbarte Klemmbereich, ist es besonders vorteilhaft, wenn beide pneumatischen Stelleinrichtungen mit dem gleichen Versorgungsdruck beaufschlagt sind, und wenn der pneumatisch wirksame Durchmesser jener Stelleinrichtung, die dem von der Anlagefläche entfernt angeordneten Klemmbereich zugeordnet ist, größer ist als der pneumatisch wirksame Durchmesser der Stelleinrichtung, die dem zu der Anlagefläche benachbarten Klemmbereich zugeordnet ist. Hierdurch wird die Ansteuerung der Vorschubvorrichtung erheblich vereinfacht, da nur eine einzige Versorgungsleitung und eine einzige Drucksteuerungseinrichtung für die Ansteuerung beider pneumatischen Stelleinrichtungen erforderlich ist. Gleichzeitig kann dennoch durch die unterschiedlichen Klemmkräfte sichergestellt werden, dass das von der Spannzange gehaltene Werkstück optimal an der Anlagefläche anliegt.

Ferner wird vorgeschlagen, dass der zu der Anlagefläche benachbarte Klemmbereich in einer nutartigen und längs zur Vorschubrichtung verlaufenden Ausnehmung so anordenbar ist, dass der Klemmbereich außerhalb eines Klemmzustands der Spannzange unterhalb der Ebene der Anlagefläche liegt. Hierdurch wird sichergestellt, dass nach Beendigung des Vorschubvorgangs beim Öffnen der Spannzange das Werkstück zuverlässig freigegeben wird, und es wird verhindert, dass bei der Rückwärtsbewegung der Spannzange entgegen der Vorschubrichtung das Werkstück an der Spannzange hängen bleibt.

Möglich ist auch, dass die Spannzange eine Justiereinrichtung mit mindestens einem Exzenterbolzen und einem Langloch mit einer Klemmschraube umfasst, durch die die Höhe der Spannzange gegenüber der Anlagefläche justiert werden kann. Hierdurch wird sichergestellt, dass im "entspannten" Zustand der der Anlagefläche benachbarte Klemmbereich ganz leicht unterhalb der Ebene der Anlagefläche liegt, was ein Erfassen und Freigeben des Werkstücks ohne Beschädigungsrisiko ermöglicht.

Nachfolgend werden besonders bevorzugte Ausführungsbeispiele der vorliegenden Erfindung unter Bezugnahme auf die beiliegende Zeichnung näher erläutert. In der Zeichnung zeigen:
- Figur 1: eine schematische Seitenansicht einer Bearbeitungsvorrichtung für plattenförmige Werkstücke mit einer Vorschubvorrichtung mit einer Spannzange;
- Figur 2: eine vergrößerte schematische Darstellung der Spannzange von Figur 1;

- Figur 3: eine perspektivische und teilweise geschnittene Detaildarstellung des Inneren der Spannzange von Figur 2;
- Figur 4: eine perspektivische Darstellung eines als Hebel ausgebildeten Spannbackens der Spannzange von Figur 3; und
- Figur 5: eine Darstellung ähnlich Figur 2 einer alternativen Ausführungsform einer Spannzange.

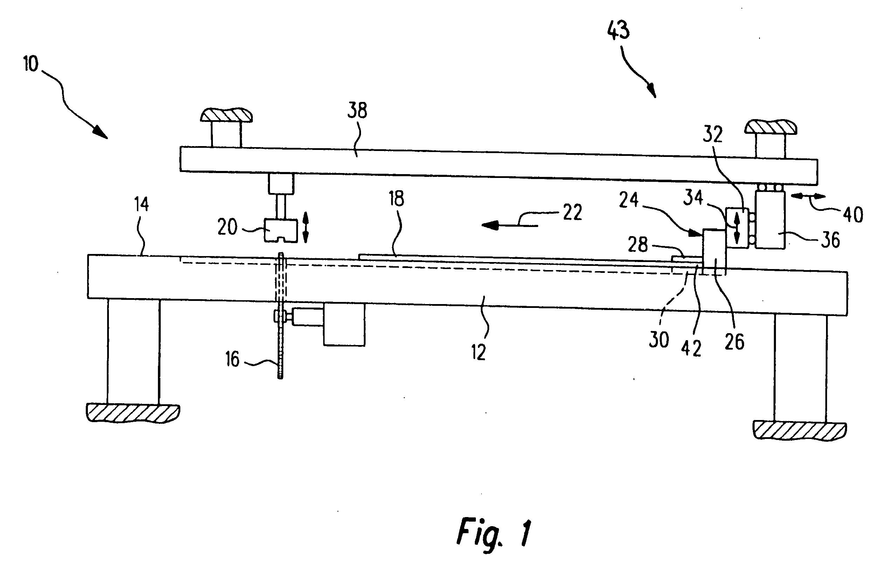

In Figur 1 trägt eine Bearbeitungsvorrichtung für plattenförmige Werkstücke insgesamt das Bezugszeichen 10. Sie umfasst einen horizontalen Auflagetisch 12 mit einer ebenfalls horizontalen oberen An- bzw. Auflagefläche 14. Als Bearbeitungsgerät ist bei der Bearbeitungsvorrichtung 10 eine Säge 16 vorgesehen, mit der ein auf der Auflagefläche 14 liegendes Werkstück 18 in einzelne Streifen aufgeteilt werden kann. Um während des Sägens das Werkstück 18 sicher in Position zu halten, ist oberhalb der Säge 16 ein vertikal verschieblicher Druckbalken 20 vorgesehen.

Um von der Säge 16 in einzelne Streifen aufgeteilt werden zu können, ist das Werkstück 18 in Vorschubrichtung (Pfeil 22) bewegbar. Hierzu sind mehrere senkrecht zur Blattebene verteilt angeordnete Spannzangen vorgesehen, von denen in Figur 1 nur eine mit dem Bezugszeichen 24 sichtbar ist. Die Spannzange 24 umfasst einen Haltekörper 26, an dem zwei Spannbacken 28 und 30 beweglich angebracht sind. Die Spannzange 24 ist an einem Schlitten 32 befestigt, welcher in vertikaler Richtung (Doppelpfeil 34) gegenüber einem senkrecht zur Blattebene verlaufenden Balken 36 verschieblich gelagert ist. In einem nicht dargestellten Ausführungsbeispiel sind die Spannzangen individuell vertikal verschieblich. Der Balken 36 kann wiederum längs zweier horizontaler Schienen, von denen in Figur 1 nur eine mit dem Bezugszeichen 38 sichtbar ist, längs zur Vorschubrichtung 22 bewegt werden (Doppelpfeil 40).

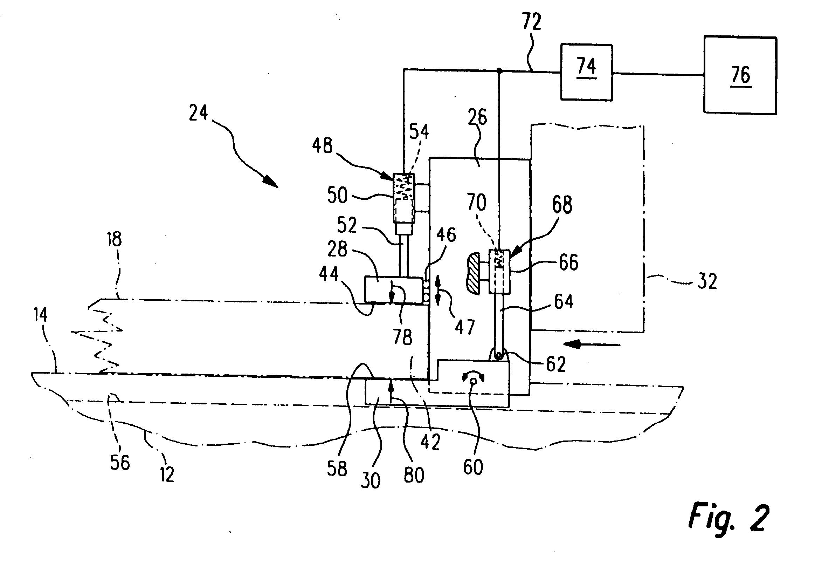

Im Betrieb wird ein in Vorschubrichtung 22 gesehen hinterer Bereich 42 des Werkstücks 18 zwischen den beiden Spannbacken 28 und 30 der Spannzange 24 verklemmt. Durch eine Bewegung des Balkens 36 in Vorschubrichtung 22 wird das Werkstück der Säge 16 zugeführt. Nach der vollständigen Bearbeitung des Werkstücks 18 wird der hintere Bereich 42 des Werkstücks 18 von der Spannzange 24 wieder freigegeben. Der Schlitten 32 mit der Spannzange 24 wird vertikal nach oben bewegt, und der Balken 36 wird entgegen der Vorschubrichtung 22 zurückgefahren. Die Komponenten 24, 32, 36 und 38 sind somit Teil einer Vorschubvorrichtung 43.
Die prinzipielle Ausgestaltung der Spannzange 24 geht aus Figur 2 hervor: Der Spannbacken 28 ist (im Vergleich zum Spannbacken 30)von der Auflagefläche 14 entfernt angeordnet und weist einen zur Auflagefläche 14 bzw. zum Werkstück 18 weisenden Klemmbereich 44 auf. Er ist über ein in Figur 2 nur symbolisch dargestelltes Linearlager 46 in einer Richtung im Wesentlichen senkrecht zur Auflagefläche 14 gegenüber dem Haltekörper 26 der Spannzange 24 bewegbar (Doppelpfeil 47). Gesteuert wird die Bewegung durch eine pneumatische Stelleinrichtung 48, vorliegend mit einem Zylinder 50 und einem Kolben 52. Dabei wirkt das pneumatisch wirksame Volumen innerhalb des Zylinders 50 als Luftfeder, wie symbolisch mit dem Bezugszeichen 54 angedeutet ist.

Der Spannbacken 30 ist (im Vergleich zum Spannbacken 28) zu der Auflagefläche 14 benachbart angeordnet. In dem in Figur 2 dargestellten Klemmzustand ist er sogar zum Teil in eine nutartige und längs zur Vorschubrichtung 22 verlaufenden und in der Auflagefläche 14 vorhandenen Ausnehmung 56 abgesenkt. Er weist einen zum Spannbacken 28 hin zeigenden Klemmbereich 58 auf, der mit dem hinteren Bereich 42 des Werkstücks 18 zusammenarbeitet. Der Spannbacken 30 ist als Hebel ausgebildet, der um eine Schwenkachse 60 gegenüber dem Haltekörper 26 verschwenkt werden kann. Die Schwenkachse 60 verläuft parallel zur Auflagefläche und liegt in der gleichen Ebene wie der Klemmbereich 58.

Das vom Klemmbereich 58 abgewandte Ende des Spannbackens 30 ist in 62 gelenkig mit einem Kolben 64 verbunden, der in einem Pneumatikzylinder 66 geführt ist. Der Kolben 64 und Zylinder 66 bilden eine pneumatische Stelleinrichtung 68. Der Durchmesser des Kolbens 64 und somit die pneumatisch wirksame Fläche ist kleiner als der Durchmesser des Kolbens 52 bzw. die pneumatisch wirksame Fläche der pneumatischen Stelleinrichtung 48. Analog zur pneumatischen Stelleinrichtung 48 bildet das pneumatisch wirksame Volumen der pneumatischen Stelleinrichtung 68 ebenfalls eine Luftfeder, was symbolisch angedeutet und mit 70 bezeichnet ist.

Die beiden pneumatischen Stelleinrichtungen 48 und 68 sind über eine gemeinsame Versorgungsleitung 72 an eine Ventileinheit 74 angeschlossen, sie werden also mit dem gleichen pneumatischen Versorgungsdruck beaufschlagt. Die Ventileinheit 74 wird von einer Steuer- und Regeleinrichtung 76 angesteuert.

Die in Figur 2 gezeigte Spannzange 24 arbeitet wie folgt: Außerhalb eines Klemmzustandes sind die beiden pneumatischen Stelleinrichtungen 48 und 68 derart geschaltet, dass die Spannzange 24 geöffnet ist. Bei einem nicht gezeigten Ausführungsbeispiel werden hierzu in Öffnungsrichtung wirkende Federn eingesetzt. Soll ein Werkstück 18 von der Spannzange 24 erfasst werden, wird diese durch Verschiebungen des Balkens 36 und bei dem gezeigten Ausführungsbeispiel auch des Schlittens 32 in den Richtungen 34 und 40 so positioniert, das der hintere Endbereich 42 des Werkstücks 18 zwischen den beiden Spannbacken 28 und 30 am Haltekörper 26 der Spannzange 24 anliegt. Dann werden die beiden pneumatischen Stelleinrichtungen 48 und 68 unter Druck gesetzt, wodurch sich die beiden Spannbacken 28 und 30 mit dem jeweiligen Klemmbereich 44 bzw. 58 aufeinander zu bewegen. Der Klemmbereich 44 des Spannbackens 28 bewegt sich dabei linear längs des Pfeils 47, der Klemmbereich 58 des Spannbackens 30 schwenkt in Figur 2 im Uhrzeigersinn um die Schwenkachse 60.

Aufgrund der unterschiedlichen Durchmesser der Kolben 52 und 64, unter Berücksichtigung der entsprechenden Hebelarme des Spannbackens 30, übt der Klemmbereich 44 des Spannbackens 28 eine größere Kraft (Pfeil 78) auf den hinteren Bereich 42 des Werkstücks 18 aus als der Klemmbereich 58 des Spannbackens 30 (Pfeil 80). Hierdurch wird der hintere Bereich 42 des Werkstücks 18 mit der entsprechenden Differenzkraft auf die Auflagefläche 14 gedrückt. Diese ist jedoch so gering, dass das Werkstück 18 nicht beschädigt wird.

Wird nun die Spannzange 24 durch eine Bewegung des Balkens 36 in Vorschubrichtung 22 bewegt, kann aufgrund von Unebenheiten der Auflagefläche 14 eine Bewegung des hinteren Bereichs 42 des Werkstücks 18 in einer Richtung senkrecht zur Auflagefläche 14 erforderlich sein ("schwimmende Lagerung"). Dies ist durch die Luftfedern 54 und 70 ohne weiteres möglich. Durch den Kraftüberschuss zur Auflagefläche 14 hin wird dabei sichergestellt, dass der Endbereich 42 an der Auflagefläche 14 anliegt.

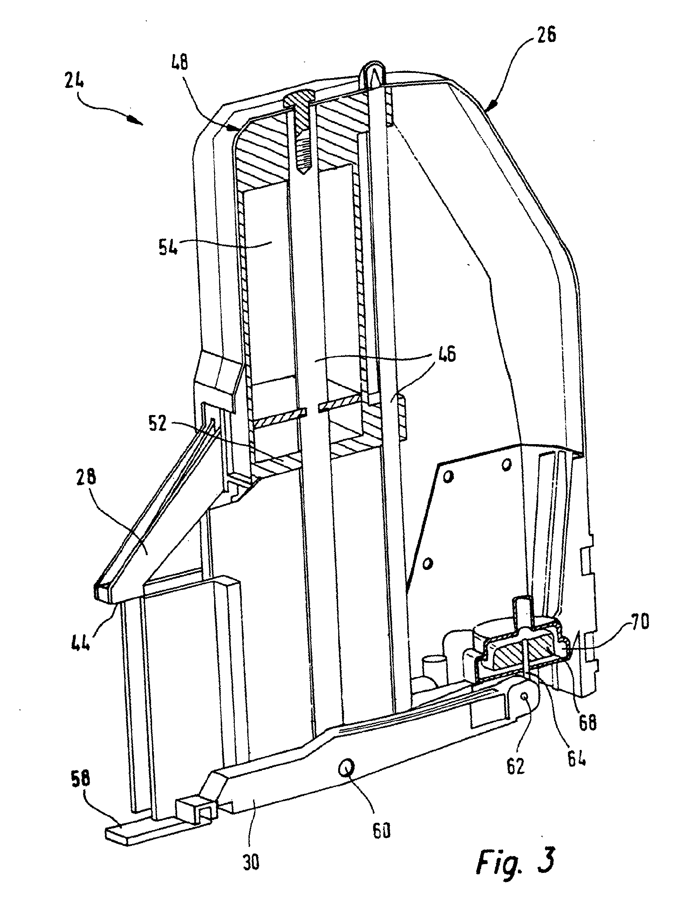

In Figur 3 ist eine konkrete Ausführungsform der Spannzange 24 detailliert gezeigt. Dabei tragen hier und nachfolgend solche Elemente und Bereiche, welche äquivalente Funktionen zu vorher beschriebenen Elementen und Bereichen aufweisen, die gleichen Bezugszeichen. Sie sind nicht nochmals im Detail erläutert.

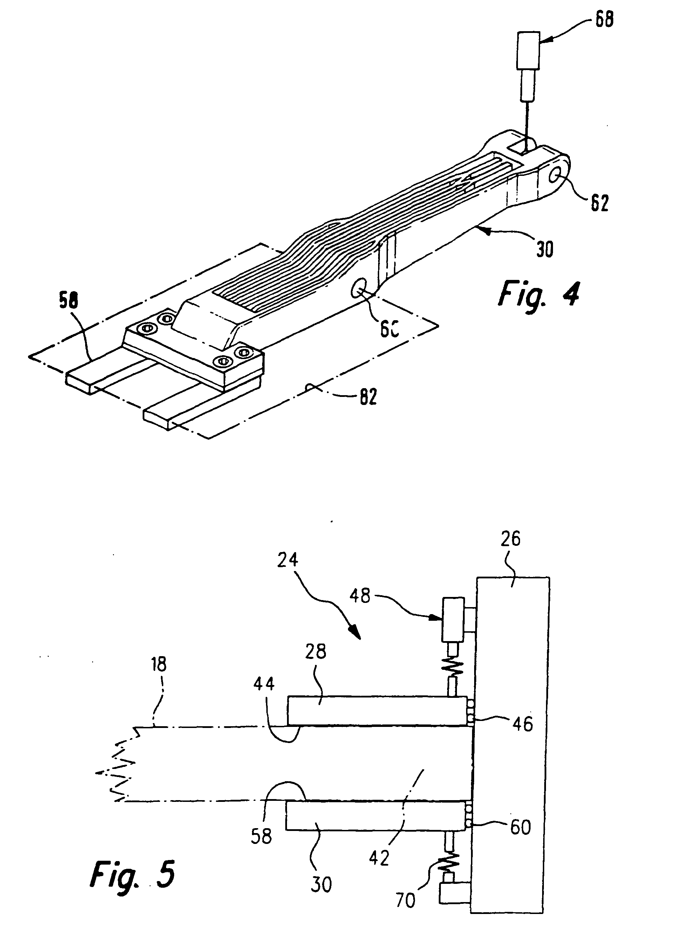

Man erkennt, dass die pneumatische Stelleinrichtung 68, mit der der hebelartige Spannbacken 30 betätigt wird, als Membranzylinder ausgebildet ist und daher besonders klein baut. Der hebelartige Spannbacken 30 ist im Detail darüber hinaus in Figur 4 gezeigt. Aus dieser ist besonders gut ersichtlich, dass die Schwenkachse 60 und der Klemmbereich 58 in der gleichen Ebene liegen (strichpunktiert dargestellt und mit dem Bezugszeichen 82 gekennzeichnet).

Ferner ist bei der in Figur 3 gezeigten Ausführungsform das Linearlager 46 in die pneumatische Stelleinrichtung 48 integriert: Diese umfasst nämlich einen doppelt wirkenden beweglichen Pneumatikzylinder 50, der an seinem oberen und seinem unteren Ende durch zwei parallele stationäre Stangen 52a und 52b verdrehsicher geführt ist. Hierdurch ergibt sich ein sehr langes Führungsverhältnis und eine hohe Kippsteifigkeit des Zylinders 50 und des an diesem befestigten Klemmbackens 28. Der Haltekörper 26 ist im übrigen als Multifunktionsteil beispielsweise aus Zink- oder Aluminiumdruckguss hergestellt. Folgende Funktionen sind in einstückiger Form integriert: Zylinder 66, Schwenkachse 60, Aufnahmen der Stangen 52a und 52b, Luftkanäle (nicht dargestellt) für die pneumatische Ansteuerung, und die Ventileinheit 74.

Eine nochmals alternative Ausführungsform einer Spannzange ist ein Figur 5 gezeigt.

Ein wesentlicher Unterschied des in den Figuren 5 gezeigten Ausführungsbeispiels zu dem vorhergehenden Ausführungsbeispiel besteht in der Lagerung des Spannbackens 30: Dieser ist nicht als Hebel ausbildet, sondern ähnlich wie der Spannbacken 28 über ein Linearlager 60 am Haltekörper 26 linear verschieblich gehalten. Darüber hinaus ist der Spannbacken 30 nicht pneumatisch ansteuerbar, sondern durch eine einfache Feder 70 gegenüber dem Haltekörper 26 federnd abgestützt. Alternativ, jedoch nicht gezeigt, kann anstelle der Feder auch eine ansteuerbare Stelleinrichtung vorgesehen sein.

Bei einem nicht dargestellten Ausführungsbeispiel ist der Haltekörper der Spannzange justierbar am Schlitten befestigt. Hierzu sind an der Spannzange zwei Exzenterbolzen vorgesehen, welche mit einem Schraubenzieher verdreht werden können und deren Exzenterabschnitt jeweils mit einer entsprechenden Öffnung im Schlitten zusammenarbeitet. Über Führungsstifte ist der Haltekörper in im Schlitten vorhandenen Langlöchern in Justierrichtung geführt. Hierdurch kann vor der Inbetriebnahme und nach der Montage der Vorschubvorrichtung die Spannzange so justiert werden, dass die Ebene des unteren Klemmbereichs im "entspannten" Zustand ganz leicht unterhalb der Ebene der Auflagefläche liegt. Die Aufnahmen für die Exzenterbolzen und die Führungsstifte können ebenfalls in den Haltekörper einstückig integriert sein.

## Patentansprüche

1. Vorschubvorrichtung (41) für plattenförmige Werkstücke (18), mit einer Anlagefläche (14), an die mindestens ein plattenförmiges Werkstück (18) angelegt werden kann, und mit mindestens einer längs der Vorschubrichtung (22) bewegbaren Spannzange (24), mit der mindestens ein plattenförmiges Werkstück (18) gegriffen werden kann, wobei die Spannzange (24) einen für den Klemmvorgang nicht zu bewegenden Haltekörper (26) und mindestens einen von der Anlagefläche (14) entfernt angeordneten und am Haltekörper (26) befestigten Klemmbereich (44) und mindestens einen zu der Anlagefläche (14) benachbarten und am gleichen Haltekörper (26) befestigten Klemmbereich (58) aufweist, zwischen denen das Werkstück (18) **dadurch** klemmbar ist, dass mindestens einer der Klemmbereiche (44, 58) in Richtung auf den anderen Klemmbereich zu bewegbar ist, **dadurch gekennzeichnet, dass** beide Klemmbereiche (44, 58) auch bei geklemmtem Werkstück (18) zusammen mit diesem in Klemmrichtung gegenüber dem Haltekörper (26) federnd beweglich gehalten sind (54, 70).

2. Vorschubvorrichtung (41) nach Anspruch 1, **dadurch gekennzeichnet, dass** im Klemmzustand der von der Anlagefläche (14) entfernt angeordnete Klemmbereich (44) eine größere Kraft (78) auf das Werkstück (18) ausübt als der zu der Anlagefläche (14) benachbarte Klemmbereich (58).

3. Vorschubvorrichtung (41) nach einem der Ansprüche 1 oder 2, **dadurch gekennzeichnet, dass** der zu der Anlagefläche (14) benachbarte Klemmbereich (58) an einem Hebel (30) ausgebildet ist, der um eine Achse (60) verschwenkbar ist, die parallel zur Anlagefläche (14) verläuft.

4. Vorschubvorrichtung (41) nach Anspruch 3, **dadurch gekennzeichnet, dass** der zu der Anlagefläche (14) benachbarte Klemmbereich (58) in der gleichen Ebene (82) wie die Schwenkachse (60) liegt.

5. Vorschubvorrichtung (41) nach einem der Ansprüche 1 oder 2, **dadurch gekennzeichnet, dass** der zu der Anlagefläche (14) benachbarte Klemmbereich (58) in einer Richtung linear verschieblich ist (60), die senkrecht zur Anlagefläche (14) verläuft.

6. Vorschubvorrichtung (41) nach einem der vorhergehenden Ansprüche, **dadurch gekennzeichnet, dass** der von der Anlagefläche (14) entfernt angeordnete Klemmbereich (58) mit einer ansteuerbaren pneumatischen Stelleinrichtung (48) verbunden ist.

7. Vorschubvorrichtung (41) nach einem der vorhergehenden Ansprüche, **dadurch gekennzeichnet, dass** der zu der Anlagefläche (14) benachbarte Klemmbereich (58) mit einer ansteuerbaren pneumatischen Stelleinrichtung (68) verbunden ist.

8. Vorschubvorrichtung (41) nach einem der Ansprüche 6 oder 7, **dadurch gekennzeichnet, dass** das Pneumatikvolumen der pneumatischen Stelleinrichtung (48, 68) als Luftfeder (54, 70) wirkt.

9. Vorschubvorrichtung (41) nach einem der Ansprüche 7 oder 8 in Verbindung mit Anspruch 2, **dadurch gekennzeichnet, dass** beide pneumatische Stelleinrichtungen (48) 68) mit dem gleichen Versorgungsdruck beaufschlagt sind, und dass der pneumatisch wirksame Durchmesser jener Stelleinrichtung (48), die dem von der Anlagefläche (14) entfernt angeordneten Klemmbereich (44) zugeordnet ist, größer ist als der pneumatisch wirksame Durchmesser der Stelleinrichtung (68), die dem zu der Anlagefläche (14) benachbarten Klemmbereich (58) zugeordnet ist.

10. Vorschubvorrichtung (41) nach einem der vorhergehenden Ansprüche, **dadurch gekennzeichnet, dass** der zu der Anlagefläche (14) benachbarte Klemmbereich (58) in einer nutartigen und längs zur Vorschubrichtung (22) verlaufenden Ausnehmung (56) so anordenbar ist, dass der Klemmbereich (58) außerhalb eines Klemmzustands der Spannzange (24) unterhalb der Ebene der Anlagefläche (14) liegt.

11. Vorschubvorrichtung (41) nach einem der vorhergehenden Ansprüche, **dadurch gekennzeichnet, dass** sie eine Justiereinrichtung mit mindestens einem Exzenterbolzen und einem Langloch mit einer Klemmschraube umfasst, durch die die Höhe der Spannzange (24) gegenüber der Anlagefläche justiert werden kann.

12. Spannzange (24) für eine Vorschubvorrichtung (41) nach einem der Ansprüche 1 bis 11, mit der mindestens ein plattenförmiges Werkstück (18) gegriffen werden kann, wobei die Spannzange (24) einen beim Klemmvorgang nicht zu bewegenden Haltekörper (26) und mindestens einen von der Anlagefläche (14) entfernt angeordneten und am Haltekörper (26) befestigten Klemmbereich (44) und mindestens einen zu der Anlagefläche (14) benachbarten und am gleichen Haltekörper (26) befestigten Klemmbereich (58) aufweist, zwischen denen das Werkstück (18) **dadurch** klemmbar ist, dass mindestens einer der Klemmbereiche (44, 58) in Richtung auf den anderen Klemmbereich so zu bewegbar ist, dass die Klemmbereiche (44, 58) das Werkstück (18) kontaktieren, **dadurch gekennzeichnet, dass** beide Klemmbereiche (44, 58) auch bei geklemmtem Werkstück (18) zusammen mit diesem in Klemmrichtung gegenüber dem Haltekörper federnd beweglich gehalten sind (54, 70).

## Claims

1. A feeding device (41) for plate-shaped workpieces (18), having a contact face (14), against which at least one plate- shaped workpiece (18) can be placed, and having at least one collet chuck (24), which can be moved along in the feed direction (22) and by means of which at least one plate-shaped workpiece (18) can be gripped, wherein the collet chuck (24) has a holding body (26), which is not to be moved for the clamping process, and at least one clamping area (44), which is arranged remote from the contact face (14) and is fastened on the holding body (26), and at least one clamping area (58), which adjoins the contact face (14) and is fastened on the same holding body (26), between which the workpiece (18) can be clamped because at least one of the clamping areas (44, 58) can be moved in the direction toward the other clamping area, **characterized in that**, even with the workpiece (18) clamped, both clamping areas (44, 58) are held, together with the workpiece, resiliently movable (54, 70) in the clamping direction in respect to the holding body (26).

2. The feeding device (41) in accordance with claim 1, **characterized in that**, in the clamped state, the clamping area (44) arranged remote from the contact face (14) exerts a greater force (78) on the workpiece (18) than the clamping area (58) adjoining the contact face (14).

3. The feeding device (41) in accordance with one of claims 1 or 2, **characterized in that** the clamping area (58) adjoining the contact face (14) is embodied on a lever (30), which is pivotable around a shaft (60) which extends parallel in respect to the contact face (14).

4. The feeding device (41) in accordance with claim 3, **characterized in that** the clamping area (58) adjoining the contact face (14) is located in the same plane (82) as the pivot shaft (60).

5. The feeding device (41) in accordance with one of claims 1 or 2, **characterized in that** the clamping area (58) adjoining the contact face (14) is linearly displaceable in a direction (60), which extends perpendicularly in respect to the contact face (14).

6. The feeding device (41) in accordance with one of the preceding claims, **characterized in that** the clamping area (48) remote from the contact face (14) is connected with a pneumatic actuating arrangement (48), which can be triggered.

7. The feeding device (41) in accordance with one of the preceding claims, **characterized in that** the clamping area (58) adjoining the contact face (14) is connected with a pneumatic actuating arrangement (68), which can be triggered.

8. The feeding device (41) in accordance with one of claims 6 or 7, **characterized in that** the pneumatic volume of the pneumatic actuating arrangement (48, 68) acts as an air spring (54, 70).

9. The feeding device (41) in accordance with one of claims 7 or 8, together with claim 2, **characterized in that** both pneumatic actuating arrangements (48, 68) are charged with an identical supply pressure, and that the pneumatically effective diameter of that actuating arrangement (48) which is assigned to the clamping area (44) arranged remote from the contact face (14), is greater than the pneumatically effective diameter of the actuating arrangement (68) which is assigned to the clamping area (58) adjoining the contact face (14).

10. The feeding device (41) in accordance with one of the preceding claims, **characterized in that** the clamping area (58) adjoining the contact face (14) is arranged in a groove-like recess (56), which extends along the feed direction (22), in such a way that in a state, when the collet chuck (24) is not in the clamped state, the clamping area (58) is located below the plane of the contact face (14).

11. The feeding device (41) in accordance with one of the preceding claims, **characterized in that** it comprises an adjusting device with at least one eccentric bolt and an elongated hole with a clamping screw, by means of which the height of the collet chuck (24) can be adjusted in respect to the contact face.

12. A collet chuck (24) for a feeding device (41) in accordance with one of claims 1 to 11, by means of which it is possible to grip at least one plate-shaped workpiece (18), wherein the collet chuck (24) has a holding body (26), which is not to be moved for the clamping process, and at least one clamping area (44), which is arranged remote from the contact face (14) and is fastened on the holding body (26), and at least one clamping area (58), which adjoins the contact face (14) and is fastened on the same holding body (26), between which the workpiece (18) can be clamped because at least one of the clamping areas (44, 58) can be moved in the direction toward the other clamping area in such a way that the clamping areas (44, 58) contact the workpiece (18), **characterized in that**, even with the workpiece (18) clamped, both clamping areas (44, 58) are held, together with the workpiece, resiliently movable (54, 70) in the clamping direction in respect to the holding body (26).

## Revendications

1. Dispositif d'alimentation (41) destiné à des pièces (18) de type panneaux, comportant une surface de positionnement (14), sur laquelle peut être disposée au moins une pièce (18) de type panneau, et au moins une pince de serrage (24) pouvant se déplacer le long du dispositif d'alimentation (22), permettant de saisir la au moins une pièce de type panneau (18), moyennant quoi la pince de serrage (24) présente un corps de maintien (26) ne devant pas être déplacé pour l'opération de serrage, et au moins une zone de serrage (44) éloignée de la surface de positionnement (14), et fixée sur le corps de maintien (26), et au moins une zone de serrage (58) proche de la surface de positionnement (14) et fixée sur le même corps de maintien (26), entre lesquelles zones la pièce (18) peut être serrée en ce que au moins l'une des zones de serrage (44, 58) peut se déplacer en direction de l'autre zone de serrage, **caractérisé en ce que** les deux zones de serrage (44, 58), même lorsque la pièce (18) est serrée, sont maintenues en pouvant se déplacer de manière élastique (54, 70), conjointement avec celle-ci, dans le sens de serrage, par rapport au corps de maintien (26).

2. Dispositif d'alimentation (41) selon la revendication 1, **caractérisé en ce que**, dans l'état de serrage, la zone de serrage (44) éloignée de la surface de positionnement (14) exerce une plus grande force (78) sur la pièce (18) que la zone de serrage (58) proche de la surface de positionnement (14).

3. Dispositif d'alimentation (41) selon la revendication 1 ou 2, **caractérisé en ce que** la zone de serrage (58) proche de la surface de positionnement (14) est agencée sur un levier (30), qui peut pivoter autour d'un axe (60) s'étendant parallèlement à la surface de positionnement (14).

4. Dispositif d'alimentation (41) selon la revendication 3, **caractérisé en ce que** la zone de serrage (58) proche de la surface de positionnement (14) se trouve dans le même plan (82) que l'axe de pivotement (60).

5. Dispositif d'alimentation (41) selon la revendication 1 ou 2, **caractérisé en ce que** la zone de serrage (58) proche de la surface de positionnement (14) peut être déplacée linéairement (60), dans une direction qui est perpendiculaire à la surface de positionnement (14).

6. Dispositif d'alimentation (41) selon l'une quelconque des revendications précédentes, **caractérisé en ce que** la zone de serrage (58) éloignée de la surface de positionnement (14) est reliée à un dispositif de réglage (48) pneumatique, pouvant être commandé.

7. Dispositif d'alimentation (41) selon l'une quelconque des revendications précédentes, **caractérisé en ce que** la zone de serrage (58) proche de la surface de positionnement (14) est reliée à un dispositif de réglage (68) pneumatique, pouvant être commandé.

8. Dispositif d'alimentation (41) selon la revendication 6 ou 7, **caractérisé en ce que** le volume pneumatique du dispositif de réglage (48, 68) pneumatique fait office de ressort pneumatique (54, 70).

9. Dispositif d'alimentation (41) selon la revendication 7 ou 8 combinée à la revendication 2, **caractérisé en ce que** les deux dispositifs de réglage (48, 68) pneumatiques sont sollicités avec la même pression d'alimentation, et **en ce que** le diamètre actif du point de vue pneumatique de chaque dispositif de réglage (48), qui est associé à la zone de serrage (44) éloignée de la surface de positionnement (14), est supérieur au diamètre actif au niveau pneumatique du dispositif de réglage (68) qui est associé à la zone de serrage (58) proche de la surface de positionnement (14).

10. Dispositif d'alimentation (41) selon l'une quelconque des revendications précédentes, **caractérisé en ce que** la zone de serrage (58) proche de la surface de positionnement (14) peut être disposée dans un évidement (56) de type rainure, s'étendant longitudinalement par rapport au dispositif d'alimentation (22), de telle sorte que la zone de serrage (58) se trouve en dessous du plan de la surface de positionnement (14), en dehors d'un état de serrage de la pince de serrage (24).

11. Dispositif d'alimentation (41) selon l'une quelconque des revendications précédentes, **caractérisé en ce qu'**il comporte un dispositif d'ajustement avec au moins un boulon excentré et un trou oblong avec une vis de serrage, permettant d'ajuster la hauteur de la pince de serrage (24) par rapport à la surface de positionnement.

12. Pince de serrage (24) destinée à un dispositif d'alimentation (41) selon l'une quelconque des revendications 1 à 11, permettant de saisir au moins une pièce (18) de type panneau, moyennant quoi la pince de serrage (24) présente un corps de maintien (26) ne devant pas de déplacer lors de l'opération de serrage, et au moins une zone de serrage (44) éloignée de la surface de positionnement (14) et fixée sur le corps de maintien (26), et au moins une zone de serrage (58) proche de la surface de positionnement (14) et fixée sur le même corps de maintien (26), entre lesquelles zones la pièce (18) peut être serrée en ce qu'au moins l'une des zones de serrage (44, 58) peut être déplacée de telle sorte en direction de l'autre zone de serrage, que les zones de serrage (44, 58) entrent en contact avec la pièce (18), **caractérisée en ce que** les deux zones de serrage (44, 58), même lorsque la pièce (18) est serrée, sont maintenues en pouvant se déplacer de manière élastique (54, 70), conjointement avec celle-ci, dans le sens de serrage, par rapport au corps de maintien.
